# EUROPEAN PATENT APPLICATION

(11) **EP 2 442 524 A1**
(43) Date of publication of application: **18.04.2012**
(21) Application number: 10805960.1
(22) Date of filing: 20.04.2010
(51) Int. Cl.: H04L 29/06

(54) **RESOURCE CONFIGURATION METHOD AND SYSTEM FOR SEMI-PERSISTENT SCHEDULING FOR VOICE OVER INTERNET PROTOCOL SERVICE**

(30) Priority: 06.08.2009 CN 200910161590
(71) Applicant: ZTE Corporation, Shenzhen, Guangdong 518057 (CN)
(72) Inventor: YANG, De, Shenzhen Guangdong 518057 (CN); ZHANG, Xianzhou, Shenzhen Guangdong 518057 (CN)
(74) Representative: Maggs, Michael Norman
(86) International application number: PCT/CN2010/071926
(87) International publication number: WO 2011/015056

(57) **Abstract**

A method and system for resource configuration in semi-persistent scheduling of a voice over internet protocol (VOIP) service is disclosed. The system includes a call party and an evolved node B (eNB). The method includes: an eNB storing a corresponding relationship of a size of a voice data packet and the number of resource block (RB) resources; a call party sending to the eNB an information of the size of the voice data packet req uired by adopting a voice encoding algorithm after determining the voice encoding algorithm used in a call; and the eNB searching out the corresponding number of the RB resources from said corresponding relationship according to the size of the voice data packet after receiving the information of the size of the voice data packet, and then allocating the RB resources corresponding to the corresponding number to said call party. The present invention improves the utilization ratio of the radio resources and the call quality, and reduces the waste of the radio resources; and at the same time, the signaling overhead is reduced.

## Description

### Technical Field

The present invention relates to a long term evolution (LTE) mobile communication system, and particularly, to a method and system for resource configuration in semi-persistent scheduling of a voice over internet protocol (VOIP) service.

### Background of the Related Art

The LTE communication system is composed of an evolved-universal mobile telecommucations system terrestrial radio access network (E-UTRAN) and a core network (CN). The access network is mainly composed of evolved nodes B (eNodeB, eNB), and information interacting between eNBs is implemented through an X2 interface; and the core network is mainly composed of a mobility management entity (MME) and a serving gateway (S-GW), and the core network carries out the information interacting with the eNB through an S 1 interface. One eNB can connect with a plurality of MMEs or S-GWs to implement the information interacting, and one MME or S-GW can also connect with a plurality of eNBs to implement the information interacting.

A voice service is the most basic service in the LTE communication system, which is implemented by way of the VOIP. The typical feature of the VOIP service is to be scheduled in a semi-persistent form.

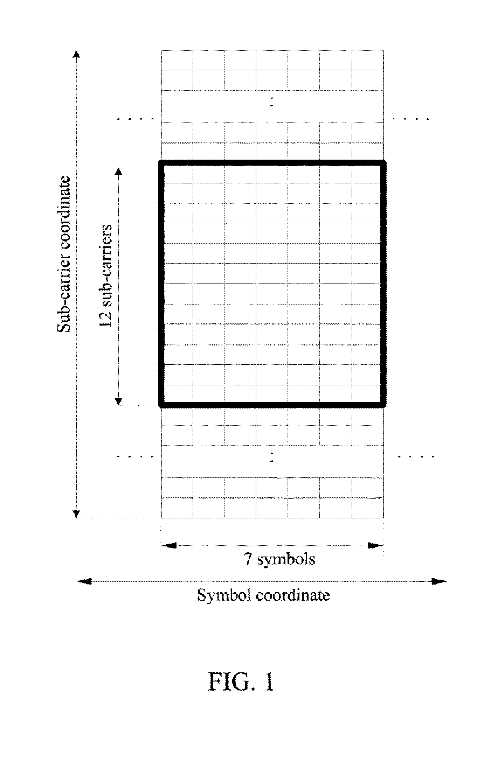

For the VOIP service, when scheduling of the VOIP service is activated in the semi-persistent form, a media access control (MAC) layer of the eNB will allocate resource block (RB) resources for a user equipment (UE), and the number of the allocated RB resources is fixedly configured by the MAC layer. As shown in FIG. 1, when the VOIP service is activated, it is assumed that the number of the RB resources allocated to the UE by the MAC layer of the eNB is 1 (as the part framed by a bold frame shown in the FIG. 1). When the activation time arrives, the RB resources allocated to the UE are fixed.

The environments in which each UE performing the VOIP service is located may be different, and the adopted voice encoding algorithms may also be varied. A calling UE and a called UE will exchange voice encoding capabilities with each other, and at the same time, determine voice decoding algorithms available for the voice call service at this time according to own decoding capabilities; then exchange the voice decoding algorithms with each other; and determine the voice encoding algorithm used in the current call according to the voice decoding algorithm used by the opposite party.

### Summary of the Invention

The difference of the voice encoding algorithms will cause sizes of voice data packets are different, thus the MAC layer configuring the fixed RB resources for the UE will cause a problem of mismatching with the practical required RB resources during the call. If the number of the resources fixedly configured by the MAC layer is greater than the number of the resources practically required, the waste of the radio resources will be caused, and the utilization ratio of the radio resources is greatly reduced; and if the number of the fixedly configured resources is less than the number of the resources practically required, the decline the quality of the VOIP service will be caused.

The technical problem to be solved in the present invention is to provide a method and system for resource configuration in semi-persistent scheduling of a voice over internet protocol service so as to overcome the drawback of, in the prior art, mismatching of the RB resources allocated to the UE by the eNB and the feature of the VOIP voice service when the VOIP service is scheduled in the semi-persistent form, thereby causing the waste of the radio resources and decline of the call quality.

In order to solve the above problem, the present invention provides a method for resource configuration in semi-persistent scheduling of a voice over internet protocol (VOIP) service, and the method comprises:
an evolved node B (eNB) storing a corresponding relationship of a size of a voice data packet and the number of resource block (RB) resources;
a call party sending to said eNB an information of the size of the voice data packet required by adopting a voice encoding algorithm after determining the voice encoding algorithm used in a call; and said eNB searching out the corresponding number of the RB resources from said corresponding relationship according to the size of the voice data packet after receiving the information of the size of the voice data packet, and then allocating the RB resources corresponding to the corresponding number to said call party.

The above method can further comprise:
when an activation time of semi-persistent scheduling of the VOIP voice service arrives, said call party transmitting service data on the RB resources allocated for said call party, until the call ends.

Said call party is a calling user equipment or a called user equipment.

In the step of allocating the RB resources corresponding to the corresponding number to said call party,
said eNB allocates the RB resources corresponding to the corresponding number to said call party through a physical downlink control channel.

The step of the call party determining the voice encoding algorithm used in the call comprises:
said call party exchanging a voice encoding capability with an opposite party, determining a voice decoding algorithm used in the call according to a voice decoding capability of the call party, then exchanging the voice decoding algorithm with said opposite party, and determining the voice encoding algorithm used by the call party itself according to the voice decoding algorithm used by said opposite party.

In order to solve the above problem, the present invention further provides a system for resource configuration in semi-persistent scheduling of a voice over internet protocol (VOIP) service, which comprises a call party and an evolved node B (eNB); wherein,
said call party is configured to: send to said eNB an information of a size of a voice data packet required by adopting a voice encoding algorithm after determining the voice encoding algorithm used in a call; and
said eNB is configure to: store a corresponding relationship of a size of a voice data packet and the number of resource block (RB) resources; and search out the corresponding number of the RB resources from said corresponding relationship according to the received information of the size of the voice data packet, and then allocate the RB resources corresponding to the corresponding number to said call party.

Said call party is further configured to transmit service data on the RB resources allocated for said call party when an activation time of semi-persistent scheduling of the VOIP voice service arrives, until the call ends.

Said call party is a calling user equipment or a called user equipment.

Said eNB is configure to allocate the RB resources corresponding to the corresponding number to said call party in the following way: allocating the RB resources corresponding to the corresponding number to said call party through a physical downlink control channel.

Said call party is configured to determine the voice encoding algorithm used in the call in the following way:
said call party exchanging a voice encoding capability with an opposite party,
determining a voice decoding algorithm used in the call according to a voice decoding capability of the call party itself; and
exchanging the voice decoding algorithm with the opposite party, and determining the voice encoding algorithm used by the call party itself according to the voice decoding algorithm used by said opposite party.

In order to solve the above problem, the present invention further provides an evolved node B (eNB) for supporting resource configuration in semi-persistent scheduling of a voice over internet protocol (VOIP) service, which is configured to:
store a corresponding relationship of a size of a voice data packet and the number of resource block (RB) resources; and
search out the corresponding number of the RB resources from said corresponding relationship according to, after a call party determining a voice encoding algorithm used in a call, an information of the size of the voice data packet required by adopting the voice encoding algorithm sent to said eNB and received from the call party, and allocate the RB resources corresponding to the corresponding number to said call party.

Said eNB is configure to allocate the RB resources corresponding to the corresponding number to said call party by the following way: allocating the RB resources corresponding to the corresponding number to said call party through a physical downlink control channel.

After adopting the present invention, comparing with the prior art, the MAC of the eNB indicates the RB resources allocated to the UE according to the size of the voice data packet practically reported by the UE, thus the present invention can solve the problem of mismatching of the radio resources and the feature of the VOIP voice service, thereby the utilization ratio of the radio resources and the call quality is improved, and the waste of the radio resources is reduced; and at the same time, the UE only reports the size of the voice data packet to the MAC of the eNB once after determining its own encoding algorithm, thus the signaling overhead is reduced.

### Brief Description of Drawings

FIG. 1 is a schematic diagram of a resource block allocated to a UE by an eNB when the UE is performing a VOIP service in the prior art;
FIG. 2 is a flow chart of a calling UE reporting a VOIP service data packet size indication message when accessing a network in an idle state according to an application example of the present invention; and
FIG. 3 is a flow chart of a called UE reporting a VOIP service data packet size indication message when accessing a network in an idle state according to an application example of the present invention.

### Preferred Embodiments of the Present Invention

The technical scheme of the present invention will be described in detail below with reference to the accompany drawings and embodiments.

The basic concept of the present invention is that: the eNB stores a corresponding relationship of the size of the voice data packet and the number of the RB resources;
after a call party determines a voice encoding algorithm used in the call, the call party sends information of the size of the voice data packet required by adopting the algorithm to the eNB; after receiving the information, the eNB searches out the corresponding number of the RB resources from the above corresponding relationship according to the size of the voice data packet, and then allocates the RB resources corresponding to the number of the RB resources to the above call party. Wherein, the call party is the calling UE or the called UE; and the eNB can allocate the RB resources corresponding to the number of the RB resources to the above call party through a physical downlink control channel (PDCCH).

Afterwards, when the activation time of the semi-persistent scheduling of the VOIP voice service arrives, the call party will transmit the service data on the RB resources allocated for the call party, until the call ends.

The method of the present invention can comprise the following steps:
step 1, a UE sets up a connection with a network;
step 2, the UE initiates a voice service, and sets up a service bearer;
step 3, the UE determines a voice encoding algorithm used in the call according to its own encoding and decoding capabilities and the encoding and decoding capabilities of the opposite UE;
step 4, the UE reports information of the size of the voice data packet required by the used algorithm to the MAC layer of the eNB according to the determined voice encoding algorithm;
step 5, the MAC layer of the eNB searches out the corresponding number of the RB resources from the corresponding relationship stored on the eNB according to the received information of the size of the voice data packet, and then allocates the RB resources corresponding to the number of the RB resources to the above UE;
step 6, when the activation time of the semi-persistent scheduling of the VOIP voice service arrives, the UE performs transmission of the service data by using the RB resources allocated for the UE by the MAC layer of the eNB, until the call ends.

The present invention will be further described by two application examples of the present invention in the following.

### Application example 1:

It will take conditions of the calling UE accessing the network and reporting the VOIP service data packet size indication message to the eNB for an example to describe the present invention.

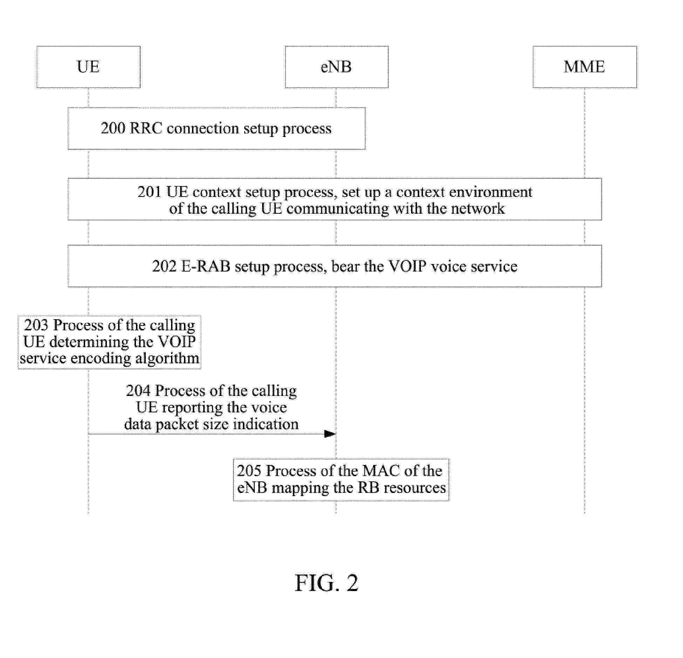

As shown in FIG. 2, it is assumed that the calling UE is in the ideal state and the size of the VOIP service data packet is 8 bytes (BYTE).

Step 200, perform a radio resource control (RRC) connection setup process, that is, the calling UE sets up the network connection with the eNB;
step 201, perform a UE context setup process so as to set up a context environment of the calling UE communicating with the network;
step 202, perform an E-UTRAN radio access bearer (E-RAB) setup process so as to bear the VOIP voice service;
step 203, a process of the calling UE determining the VOIP service encoding algorithm comprises: the calling UE exchanging the voice encoding capability/capabilities with the called UE, determining the voice decoding algorithm used in the call according to its own voice decoding capability/capabilities, then exchanging the voice decoding algorithm with the called UE, and determining the voice encoding algorithm used by itself according to the voice decoding algorithm used by the called UE;
step 204, the calling UE reports the voice data packet size indication message to the MAC layer of the eNB, wherein the voice data packet size indication message carries the information of the size of the voice data packet required by the voice encoding algorithm used by the calling UE;
step 205, a process of the MAC layer of the eNB mapping the RB resources comprises: the MAC layer of the eNB searching out the corresponding number of the RB resources from its stored corresponding relationship according to the received size of the voice data packet of 8 bytes, and then allocates the RB resources corresponding to the number of the RB resources to the calling UE. Thus, the calling UE will use the RB resources allocated to the calling UE by the MAC according to the reported size of the data packet during the activation duration of the semi-persistent scheduling, until the call ends.

### Application example 2:

It will take the condition of the called UE accessing the network and reporting the size of the VOIP service data packet to the eNB for an example to describe the present invention.

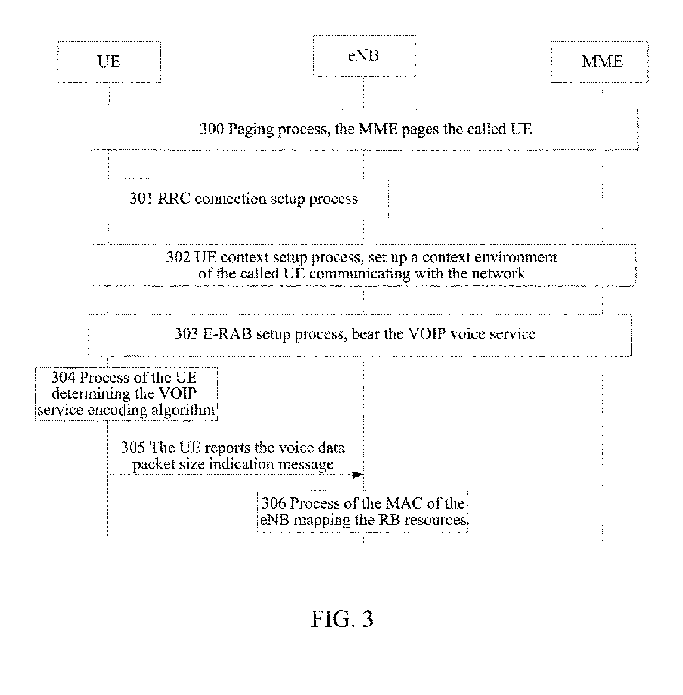

As shown in FIG. 3, it is assumed that the called UE is in the ideal state and the size of the VOIP service data packet is 10 bytes.

Step 300, perform a paging process, that is, the MME pages the called UE;
step 301, perform a RRC connection setup process, and the called UE and the eNB set up the network connection;
step 302, perform a UE context setup process so as to set up the context environment of the called UE communicating with the network;
step 303, perform an E-RAB setup process so as to bear the VOIP voice service;
step 304, a process of the called UE determining the VOIP service encoding algorithm comprises: the called UE exchanging the voice encoding capabilities with the calling UE, determining the voice decoding algorithm used in the call according to its own voice decoding capabilities, then exchanging the voice decoding algorithm with the calling UE, and determining the voice encoding algorithm used by itself according to the voice decoding algorithm used by the calling UE;
step 305, the called UE reports the voice data packet size indication message to the MAC of the eNB, wherein the voice data packet size indication message carries the information of the size of the voice data packet required by the voice encoding algorithm used by the called UE;
step 306, a process of the MAC layer of the eNB mapping the RB resources comprises: the MAC layer of the eNB searching out the corresponding number of the RB resources from its stored corresponding relationship according to the received size of the voice data packet of 10 bytes, and allocates the RB resources of this number to the called UE. Thus, the called UE will use the RB resources allocated to the called UE by the MAC according to the reported size of the data packet during the semi-persistent scheduling activation, until the call ends.

The system for resource configuration in semi-persistent scheduling of a VOIP service of the present invention comprises a call party and an eNB; wherein the call party can be the calling party UE or the called party UE.

The call party is configured to: after determining the voice encoding algorithm used in the call, send information of the size of the voice data packet required by adopting the algorithm to the eNB; and
the eNB is configured to: store a corresponding relationship of the size of the voice data packet and the number of the resource block (RB) resources; and search out the corresponding number of the RB resources in the above corresponding relationship according to the received information of the size of the voice data packet, and allocate the RB resources corresponding to this number to the above call party.

Wherein the above call party is further configured to: transmit the service data on the RB resources allocated to the call party when the activation time of the semi-persistent scheduling of the VOIP voice service arrives, until the call ends.

Besides, the eNB is configured to: allocate the RB resources corresponding to the number to the above call party through a PDCCH.

The call party is configured to determine the voice encoding algorithm used in the call by the following way: the call party exchanging the voice encoding capabilities with the opposite party, and determining the voice decoding algorithm used in this call according to its own voice decoding capabilities; and determining the voice encoding algorithm used by itself according to the voice decoding algorithm used by the opposite party after exchanging the voice decoding algorithm with the opposite party.

In order to solve the above problem, the present invention further provides an evolved node B (eNB) for supporting resource configuration in semi-persistent scheduling of a voice over internet protocol (VOIP) service, and the eNB is configured to:
store the corresponding relationship of the size of the voice data packet and the number of the resource block (RB) resources; and
search out the corresponding number of the RB resources from the above corresponding relationship according to, after the call party determines the voice encoding algorithm used in the call, the information of the size of the voice data packet required by adopting the voice encoding algorithm sent to the eNB and received from the call party, and allocate the RB resources of the corresponding number to the call party.

The eNB is configured to allocate the RB resources of the corresponding number to the call party by the following way: allocating the RB resources of the corresponding number to the call party through the physical downlink control channel (PDCCH).

Certainly, the present invention can also have other various embodiments. Various modifications and variations can be made by those having ordinary skills in the art according to the present invention without departing from the spirit and essence of the present invention and these modifications and variations should fall into the protection scope of the appended claims of the present invention.

### Industrial Applicability

In the present invention, the MAC of the eNB indicates the RB resources allocated to the UE according to the size of the voice data packet practically reported by the UE, thus the present invention can solve the problem of mismatching of the radio resources and the feature of the VOIP voice service, thereby the utilization ratio of the radio resources and the call quality is improved, and the waste of the radio resources is reduced; and at the same time, the UE only reports the size of the voice data packet to the MAC of the eNB once after determining its own encoding algorithm, thus the signaling overhead is reduced.

## Claims

1. A method for resource configuration in semi-persistent scheduling of a voice over internet protocol (VOIP) service, comprising steps of:
an evolved node B (eNB) storing a corresponding relationship of a size of a voice data packet and the number of resource block (RB) resources;
a call party sending to said eNB an information of the size of the voice data packet required by adopting a voice encoding algorithm after determining the voice encoding algorithm used in a call; and said eNB searching out the corresponding number of the RB resources from said corresponding relationship according to the size of the voice data packet after receiving the information of the size of the voice data packet, and then allocating the RB resources corresponding to the corresponding number to said call party.

2. The method as claimed in claim 1, further comprising:
when an activation time of semi-persistent scheduling of the VOIP voice service arrives, said call party transmitting service data on the RB resources allocated for said call party, until the call ends.

3. The method as claimed in claim 1, wherein
said call party is a calling user equipment or a called user equipment.

4. The method as claimed in claim 1, wherein, in the step of allocating the RB resources corresponding to the corresponding number to said call party,
said eNB allocates the RB resources corresponding to the corresponding number to said call party through a physical downlink control channel.

5. The method as claimed in claim 1 or 3, wherein,
the step of the call party determining the voice encoding algorithm used in the call comprises:
said call party exchanging a voice encoding capability with an opposite party, determining a voice decoding algorithm used in the call according to a voice decoding capability of the call party, then exchanging the voice decoding algorithm with said opposite party, and determining the voice encoding algorithm used by the call party itself according to the voice decoding algorithm used by said opposite party.

6. A system for resource configuration in semi-persistent scheduling of a voice over internet protocol (VOIP) service, comprising a call party and an evolved node B (eNB); wherein,
said call party is configured to: send to said eNB an information of a size of a voice data packet required by adopting a voice encoding algorithm after determining the voice encoding algorithm used in a call; and
said eNB is configure to: store a corresponding relationship of a size of a voice data packet and the number of resource block (RB) resources; and search out the corresponding number of the RB resources from said corresponding relationship according to the received information of the size of the voice data packet, and then allocate the RB resources corresponding to the corresponding number to said call party.

7. The system as claimed in claim 6, wherein,
said call party is further configured to: transmit service data on the RB resources allocated for said call party when an activation time of semi-persistent scheduling of the VOIP voice service arrives, until the call ends.

8. The system as claimed in claim 6, wherein,
said call party is a calling user equipment or a called user equipment.

9. The system as claimed in claim 6, wherein,
said eNB is configure to allocate the RB resources corresponding to the corresponding number to said call party in the following way: allocating the RB resources corresponding to the corresponding number to said call party through a physical downlink control channel.

10. The system as claimed in claim 6 or 8, wherein,
said call party is configured to determine the voice encoding algorithm used in the call in the following way:
said call party exchanging a voice encoding capability with an opposite party,
determining a voice decoding algorithm used in the call according to a voice decoding capability of the call party itself; and
exchanging the voice decoding algorithm with the opposite party, and determining the voice encoding algorithm used by the call party itself according to the voice decoding algorithm used by said opposite party.

11. An evolved node B (eNB) for supporting resource configuration in semi-persistent scheduling of a voice over internet protocol (VOIP) service, which is configured to:
store a corresponding relationship of a size of a voice data packet and the number of resource block (RB) resources; and
search out the corresponding number of the RB resources from said corresponding relationship according to, after a call party determining a voice encoding algorithm used in a call, an information of the size of the voice data packet required by adopting the voice encoding algorithm sent to said eNB and received from the call party, and allocate the RB resources corresponding to the corresponding number to said call party.

12. The eNB as claimed in claim 11, wherein,
said eNB is configure to allocate the RB resources corresponding to the corresponding number to said call party by the following way: allocating the RB resources corresponding to the corresponding number to said call party through a physical downlink control channel.
